# EUROPEAN PATENT APPLICATION

(11) **EP 2 456 004 A1**
(43) Date of publication of application: **23.05.2012**
(21) Application number: 11179201.6
(22) Date of filing: 29.08.2011
(51) Int. Cl.: H01M 10/50, H01M 2/02

(54) **Battery pack device**

(30) Priority: 22.11.2010 JP 2010260287
(71) Applicant: Kabushiki Kaisha Toshiba, Minato-ku, Tokyo 105-8001 (JP)
(72) Inventor: Nakahama, Takafumi, TOKYO Tokyo 105-8001 (JP); Tada, Nobumitsu, TOKYO Tokyo 105-8001 (JP); Kurokawa, Kenya, TOKYO Tokyo 105-8001 (JP); Shudo, Tadashi, TOKYO Tokyo 105-8001 (JP); Koyama, Taihei, TOKYO Tokyo 105-8001 (JP); Kakuchi, Takeo, TOKYO Tokyo 105-8001 (JP)
(74) Representative: Fritsche, Daniel

(57) **Abstract**

A battery pack device of an embodiment includes a battery module, a casing, an air inlet, an air outlet, and a ventilation channel. In the battery module, a plurality of battery cells stacked one on another are disposed. The casing is installed while housing the battery module therein. The air inlet is provided in the casing and lets an outside air into the casing. The air outlet is provided in the casing, disposed at a position higher than a position of the air inlet, and lets the air out of the casing. The ventilation channel, in the casing, connects the air inlet and the air outlet, and inclines with respect to a horizontal direction.

## Description

### FIELD

Embodiments described herein relate generally to a battery pack device.

### BACKGROUND

There has been known a battery pack whose battery module in which a plurality of battery cells in a substantially rectangular parallelepiped shape are stacked in their thickness direction via insulators or the like is housed in a casing for battery storage.

An improvement in energy density (output power per unit volume of the battery pack) is often required of the battery pack of this type. As a result, a restriction on component layout such as the dense arrangement of various kinds of components is imposed on the battery pack of this type. Therefore, in some of such battery packs, an airway for battery cooling is made narrow or a cooling fan or the like is not provided intentionally. Accordingly, stabilization of cooling performance and the like are always required of the battery pack with such a structure.

### BRIEF DESCRIPTION OF THE DRAWINGS

FIG. 1 is a perspective view schematically showing a battery pack device according to a first embodiment.

FIG. 2 is a view of the battery pack device in FIG. 1 seen from an air inlet side.

FIG. 3 is a cross-sectional view of the battery pack device taken along A-A line in FIG. 2.

FIG. 4 is a perspective view showing a battery cell included in the battery pack device in FIG. 1.

FIG. 5 is a view of another battery pack device, different in structure from the battery pack device in FIG. 1, seen from an air inlet side.

FIG. 6 is a view of a battery pack device of a comparative example, seen from an air inlet side.

FIG. 7 is a cross-sectional view of the battery pack device taken along B-B line in FIG. 6.

FIG. 8 is a view of a battery pack device according to a second embodiment seen from an air inlet side.

FIG. 9 is a cross-sectional view of the battery pack device taken along C-C line in FIG. 8.

FIG. 10 is a cross-sectional view showing the structure of a battery pack device according to a third embodiment.

FIG. 11 is a view on arrow showing the battery pack device seen in the direction of an arrow D in FIG. 10.

FIG. 12 is a view of another battery pack device, different in structure from the battery pack device in FIG. 10, seen from an air inlet side.

FIG. 13 is a view of a battery pack device according to a fourth embodiment seen from an air inlet side.

FIG. 14 is a cross-sectional view of the battery pack device taken along E-E line in FIG. 13.

FIG. 15 is a cross-sectional view showing the structure of a battery pack device according to a fifth embodiment.

### DETAILED DESCRIPTION

A battery pack device according to an embodiment includes a battery module, a casing, an air inlet, an air outlet, and a ventilation channel. In the battery module, a plurality of battery cells stacked one on another are disposed. The casing is installed while housing the battery module therein. The air inlet is provided in the casing and lets an outside air into the casing. The air outlet is provided in the casing, disposed at a position higher than a position of the air inlet, and lets the air out of the casing. The ventilation channel, in the casing, connects the air inlet and the air outlet, and inclines with respect to a horizontal direction

Hereinafter, embodiments will be described based on the drawings.

### <First Embodiment>

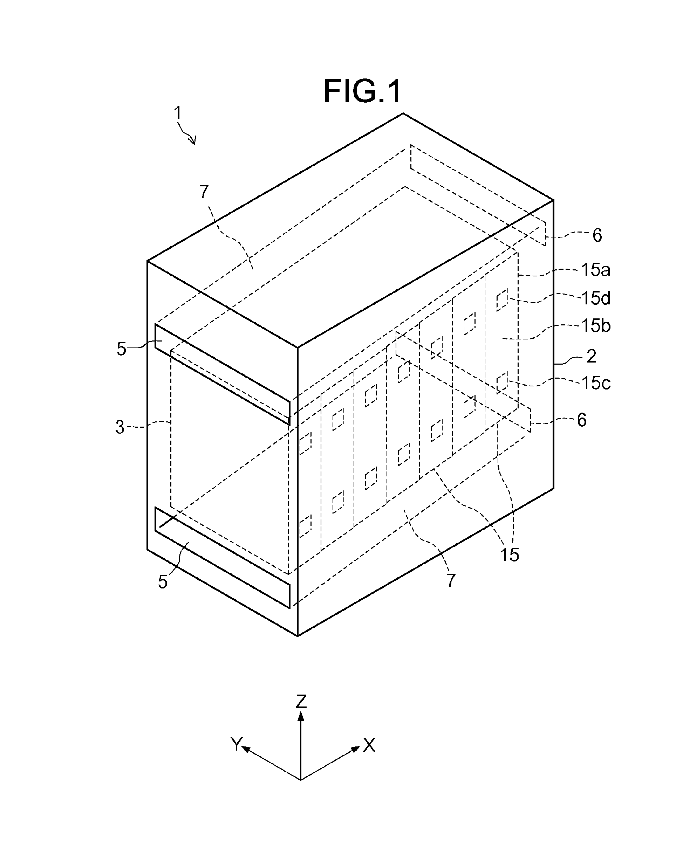

As shown in FIG. 1 to FIG. 3, a battery pack device 1 according to this embodiment is a battery pack device of a fixed type used in ordinary houses, factories, and so on. Specifically, the battery pack device 1 includes a casing 2, a battery module 3, air inlets 5, air outlets 6, ventilation channels (airways) 7, an upper end fixture 8, a lower end fixture 9, stays 10, and control component storages 12, 14.

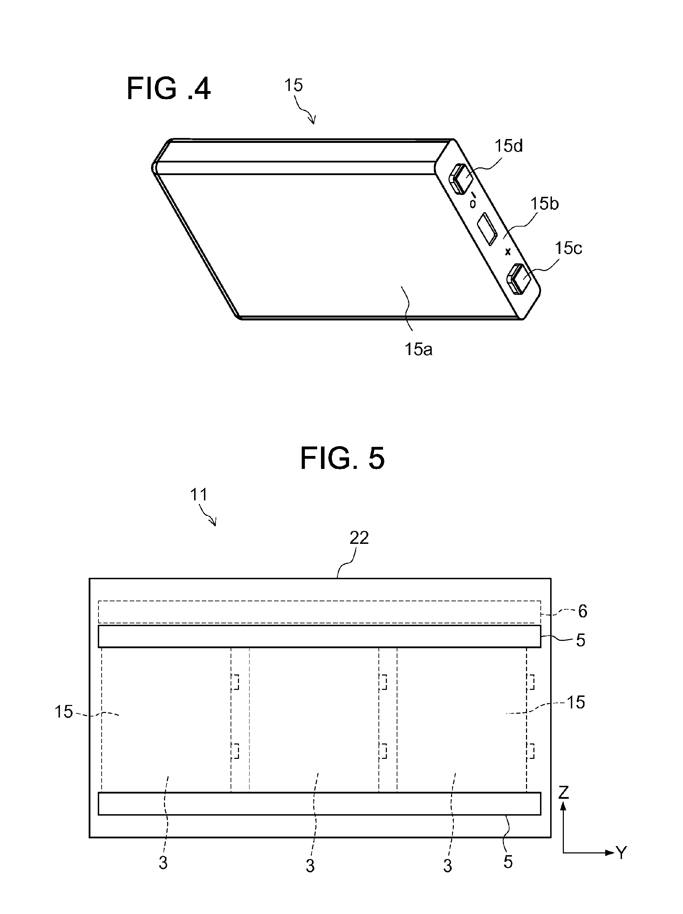

In the battery module 3, a plurality of battery cells 15 stacked one on another are disposed as shown in FIG. 1 to FIG. 3. The battery cells 15 are each formed in a substantially rectangular parallelepiped shape (thin rectangular box shape) as shown in FIG. 4. The battery cells 15 each have a pair of terminals 15c, 15d projecting from an end surface 15b of a battery cell main body 15a. The battery cells 15 are each a secondary battery such as, for example, a lithium-ion battery, a nickel-metal hydride battery, or the like.

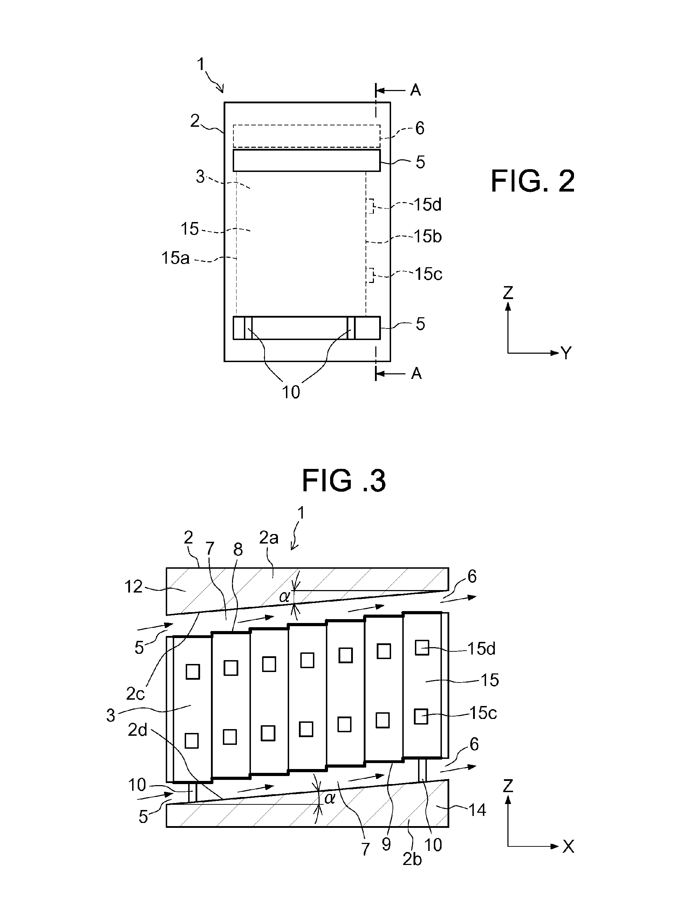

As shown in FIG. 3, the upper end fixture 8 and the lower end fixture 9 mechanically connect the battery cells 15 to one another. Concretely, the upper end fixture 8 and the lower end fixture 9 integrate and fix the plural stacked battery cells 15 by using, for example, bolts and nuts, with insulating papers or the like interposed between the battery cells 15 or around the battery cells 15.

The pairs of terminals 15c, 15d of these battery cells 15 are connected to one another via busbars or the like. Consequently, these battery cells 15 are connected to one another in series (or in parallel). The plural battery cells 15 which are not only mechanically fixed but also electrically connected to one another are covered by insulating resin such as, for example, polypropylene (PP) from the outside.

As shown in FIG. 1 to FIG. 3, the casing 2 is fixedly installed while housing the battery module 3 with such a structure therein. The casing 2 is formed in a rectangular box shape. The casing 2 encloses the battery module 3 by its six surfaces, that is, its front surface, rear surface, upper surface, bottom surface, left side surface, and right side surface. The control component storages 12, 14 are provided inside an upper casing portion 2a and a lower casing portion 2b of the casing 2. In the control component storages 12, 14, various kinds of electronic components such as circuit breakers, plugs, sensors measuring a charge/discharge state, meters, and control boards are provided. As shown in FIG. 2 and FIG. 3, the stays 10 support the battery module 3 above the lower casing portion 2b of the casing 2.

Here, a cooling function that the battery pack device 1 of this embodiment has will be described in detail. As shown in FIG. 1 to FIG. 3, the air inlets 5 are formed in a slit shape at two places of one of the side surfaces of the casing 2. These two air inlets 5 let the outside air into the casing 2. Further, the air outlets 6 are provided so as to correspond to the respective two air inlets 5, and are formed in a slit shape at two places of the other side surface of the casing 2. These two air outlets 6 are disposed at positions higher than positions of the corresponding air inlets 5, on the casing 2. These two air outlets 6 let the outside air, which is taken in from the air inlets 5, out of the casing 2. The air inlets 5 and the air outlets 6 in the slit shape are formed so that a longitudinal direction of the slit is directed in a horizontal direction (arrow Y direction).

Further, as shown in FIG. 1 to FIG. 3, the ventilation channels 7 extend in the casing 2 from the respective air inlets 5 toward the corresponding air outlets 6 at higher positions in a direction inclined with respect to the horizontal direction. Specifically, the ventilation channels 7 bring the outside air taken in from the air inlets 5 into contact with the battery module 3 that generates heat inside the casing 2. The air heated by this contact is discharged from the air outlets 6 to the outside. Here, as shown in FIG. 2 and FIG. 3, the battery module 3 is housed in the casing 2, with an arrangement direction of the pair of terminals 15c, 15d on each of the battery cells 15 (width direction of the battery cells), that is, a straight line connecting the terminal 15c and the terminal 15d being directed in a vertical direction (arrow Z direction).

Further, as shown in FIG. 3, in the battery module 3, the battery cells 15 are arranged in a stacked state in a direction from the air inlet 5 side toward the air outlet 6 side. In the battery module 3, the battery cells 15 are disposed so that their positions in the vertical direction become higher stepwise from the air inlet 5 side toward the air outlet 6 side. That is, the upper end fixture 8 and the lower end fixture 9 are each formed in a shape having a plurality of steps.

On a bottom surface of the upper casing portion 2a and an upper surface of the lower casing portion 2b in the casing 2, inclined surfaces 2c, 2d inclined with respect to the horizontal direction (arrow X direction) by an angle of ∝° are formed respectively. That is, as shown in FIG. 1 and FIG. 3, the ventilation channels 7 are mainly formed by spaces sandwiched between upper and bottom surfaces of the battery module 3 and the inclined surfaces 2c, 2d. This means that the ventilation channels 7 are formed at positions where the ventilation channels 7 come into contact with at least the upper surface and the bottom surface of the battery module 3 housed in the casing 2.

Instead of such a battery pack device 1, it is possible to form a battery pack device 11 in which a plurality of the battery modules 3 arranged side by side along the horizontal direction (arrow Y direction which is a height direction of the battery cells) are housed in a casing 22 as shown in FIG. 5. This battery pack device 11 can also have the same cooling performance as that of the battery pack device 1.

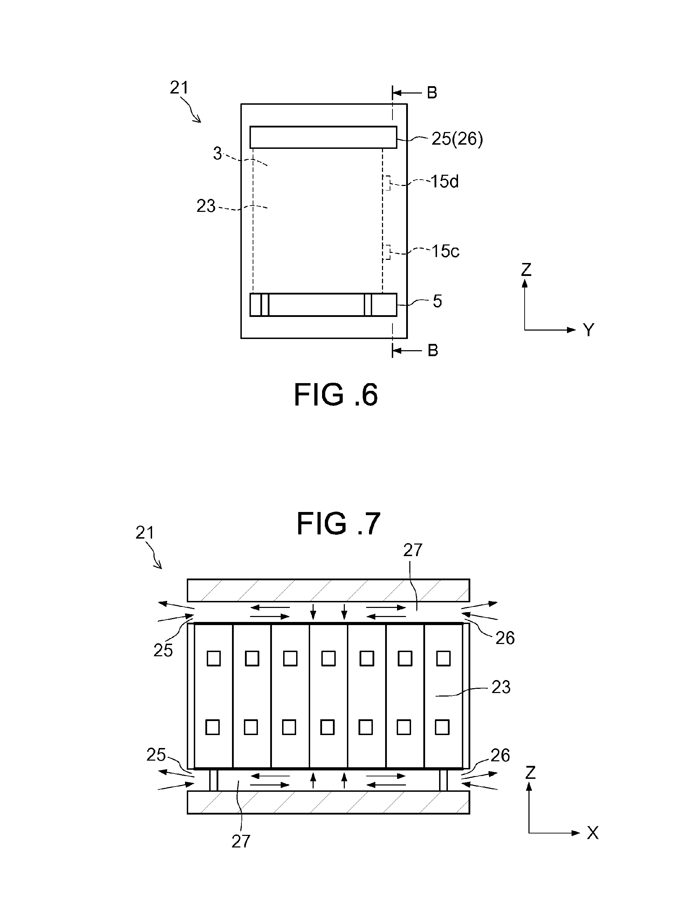

Next, a battery pack device 21 as a comparative example of the battery pack device 1 and the battery pack device 11 of this embodiment will be exemplified in FIG. 6 and FIG. 7. In the battery pack device 21 of the comparative example, ventilation channels 27 are flat without being inclined from air inlets 25 toward air outlets 26. Therefore, the air does not easily flow from the air inlet 25 side toward the air outlet side 26 in FIG. 7. Further, it is highly possible that the outflow and inflow of the air occur only in areas near entrances of both the air inlets 25 and the air outlets 26. Therefore, in the battery pack device 21 of the comparative example, it can be anticipated that performance of cooling a battery module 23 becomes unstable, and in particular, there is a possibility that the vicinity of the center is not cooled.

On the other hand, in the battery pack device 1 (and 11) of this embodiment, the air heated by the heat generation of the battery module 3 in the casing 2 flows from lower sides toward higher sides on the ventilation channels 7 as shown in FIG. 3. Therefore, the outside air taken in from the air inlets 5, after coming into contact with the surfaces of the battery module 3 in the casing 2, is smoothly discharged to the outside from the air outlets 6. This makes it possible for the battery pack device 1 (and 11) to realize the stable cooling of the battery module 3.

Here, the inclination angle α of the inclined surfaces 2c, 2d of the casing 2 shown in FIG. 3 is desirably not less than 4° nor greater than 10°, and 5° is optimum. When the inclination angle ∝ is less than 4°, the warmed air becomes stagnant in the course of flowing from the air inlet 5 side toward the air outlet 6 side. On the other hand, when the inclination angle α is over 10°, the dense arrangement of various components becomes difficult, even though the flow of the air does not become stagnant. Therefore, in this case, it becomes difficult to improve the energy density of the battery pack device. Further, the battery pack devices 1, 11 are each structured so that the upper surface and the bottom surface of the battery module 3 have a plurality of steps as shown in FIG. 3. Therefore, in the battery pack devices 1, 11, an area of the surfaces of the battery module 3 that come into contact with the outside air practically increases, which makes it possible to obtain a higher cooling effect.

In this embodiment, a description is given of the case where the air inlets 5 and the air outlets 6 are provided both on the upper surface side and the lower surface side of the battery module 3. However, depending on the outside air temperature and a heat generation state of the battery module 3, the air inlet 5 and the air outlet 6 may be provided either on the upper surface side or on the lower surface side. This applies to any of the following embodiments.

### <Second Embodiment>

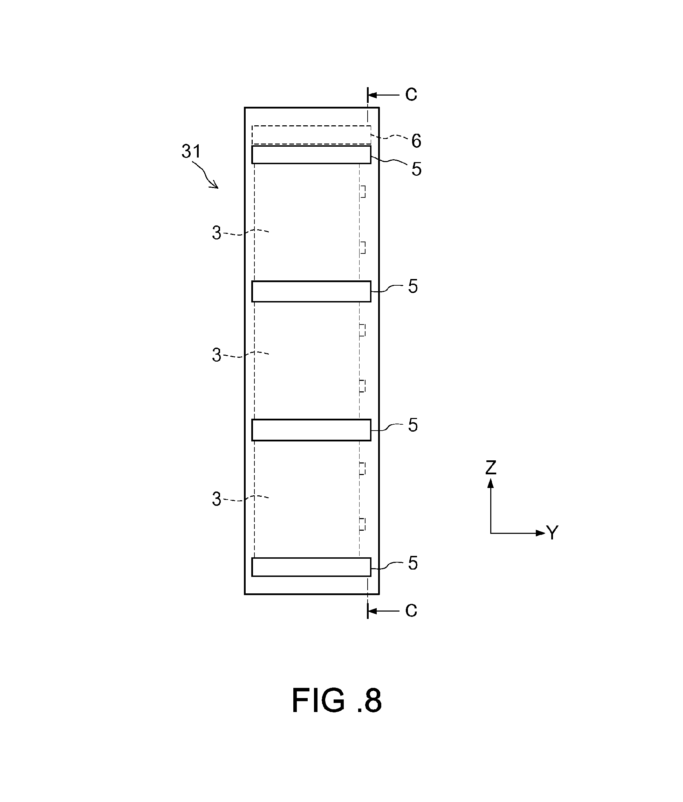

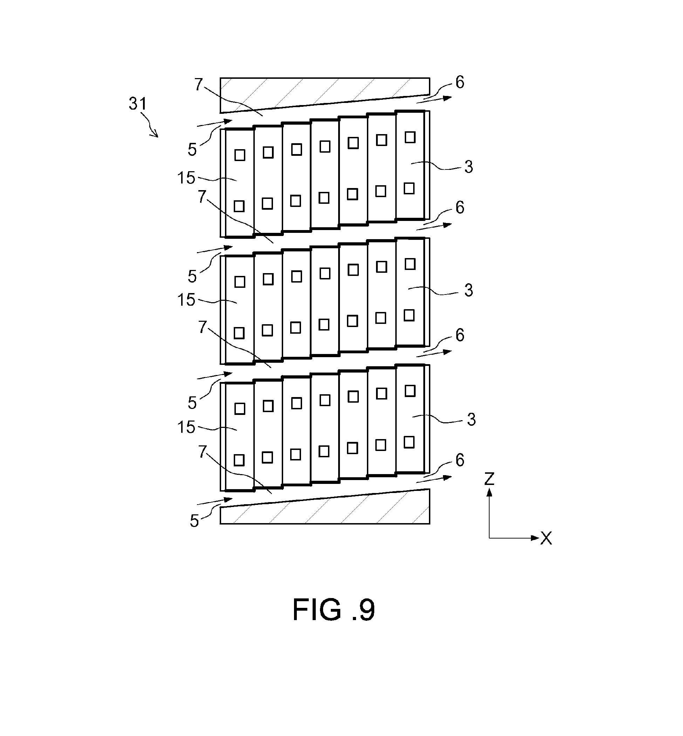

Next, a second embodiment will be described based on FIG. 8 and FIG. 9. Note that in FIG. 8 and FIG. 9, the same constituent elements as those of the first embodiment shown in FIG. 1 to FIG. 3 will be denoted by the same reference numerals and symbols, and a description thereof will be omitted. The second embodiment is structured with changes being made to the first embodiment, and only changed structures will be described. Further, in FIG. 8 and FIG. 9, the illustration of the stays 10 shown in FIG. 2 and FIG. 3 is omitted.

Specifically, as shown in FIG. 8 and FIG. 9, in a battery pack device 31, a plurality of battery modules 3 arranged side by side along a vertical direction (Z direction being a width direction of battery cells) are housed in a casing. Further, in the battery pack device 31, ventilation channels 7 are provided also between the battery modules 3 in the casing. Therefore, a stable cooling effect can be expected also in the battery pack device 31.

### <Third Embodiment>

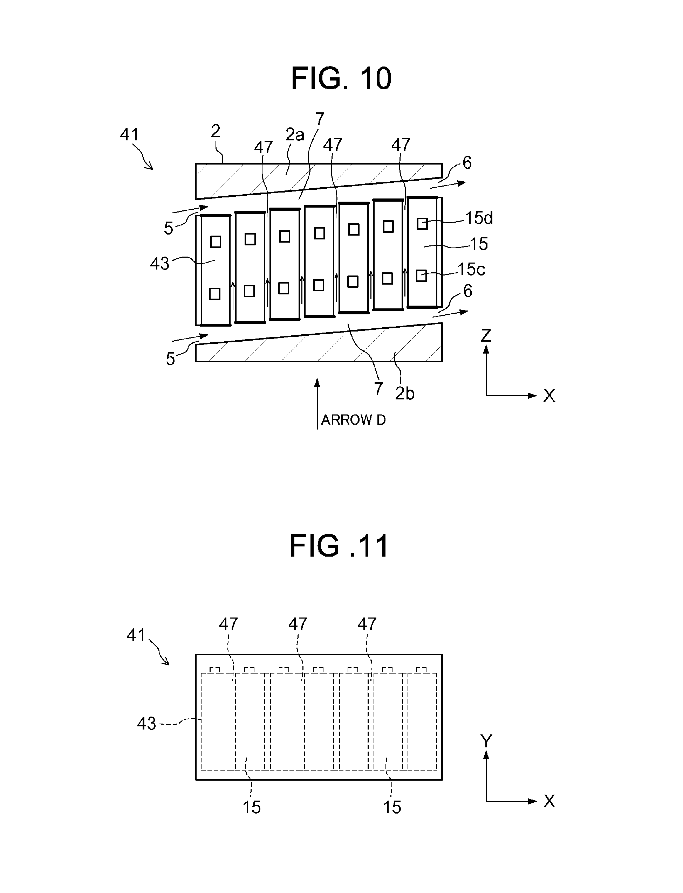

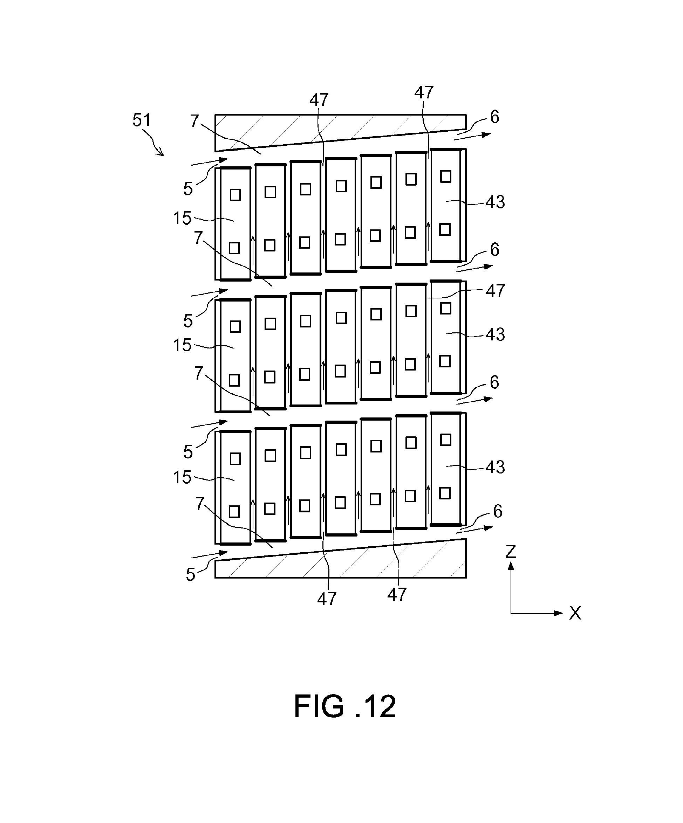

Next, a third embodiment will be described based on FIG. 10 to FIG. 12. Note that in FIG. 10 to FIG. 12, the same constituent elements as those of the first and second embodiments shown in FIG. 1 to FIG. 3, FIG. 8, and FIG. 9 are denoted by the same reference numerals and symbols, and a description thereof will be omitted. Note that in FIG. 10 and FIG. 12, the illustration of the stays 10 shown in FIG. 2 and FIG. 3 is omitted.

As shown in FIG. 10 and FIG. 11, in addition to the structure of the battery pack device 1 according to the first embodiment, a battery pack device 41 further includes a plurality of ventilation channels (second ventilation channels) 47 formed by gaps in a slit shape between battery cells 15 in a battery module 43. These ventilation channels 47 form airflows passing between the battery cells 15 along a vertical direction (Z direction being a width direction of the battery cells) in a casing 2. Here, it is also possible to form a battery pack device 51 in which a plurality of the battery modules 43 arranged side by side along the vertical direction (Z direction) are housed in the casing as shown in FIG. 12.

Therefore, the battery pack devices 41, 51 of this embodiment can have a higher effect of cooling the individual battery cells 15 owing to the plural ventilation channels 47 in addition to the ventilation channels 7. As a result, the battery pack devices 41, 51 of this embodiment can realize more stable performance of cooling the battery module 43.

### <Fourth Embodiment>

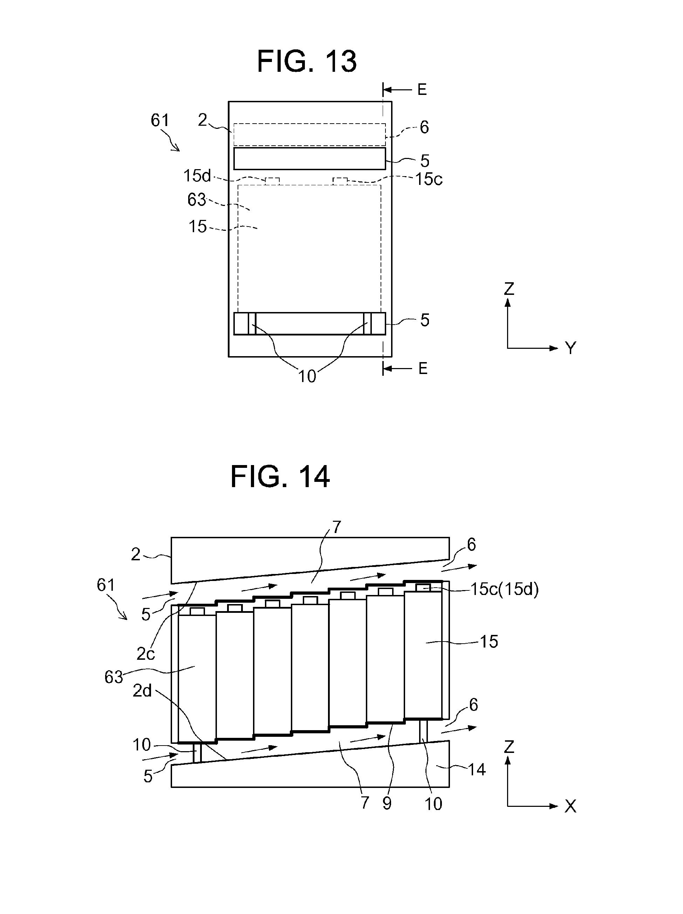

A fourth embodiment will be described based on FIG. 13 and FIG. 14. Note that in FIG. 13 and FIG. 14, the same constituent elements as those of the first to third embodiments shown in FIG. 1 to FIG. 3 and FIG. 8 to FIG. 11 will be denoted by the same reference numerals and symbols, and a description thereof will be omitted.

As shown in FIG. 13 and FIG. 14, in a battery pack device 61 of this embodiment, a battery module 63 is housed in a casing 2, with a direction in which pairs of terminals 15c, 15d of battery cells 15 project being directed in a vertical direction (Z direction). In this battery pack device 61, stable performance of cooling the battery module 63 can also be obtained.

When the battery cells 15 are each disposed in such a direction, it is also possible to form a battery pack device in which a plurality of the battery modules 63 are arranged side by side along the vertical direction (Z direction). Further, it is also possible to form a battery pack device in which a plurality of the battery modules 63 are arranged side by side along the horizontal direction (Y direction being a width direction of the battery cells of this embodiment).

### <Fifth Embodiment>

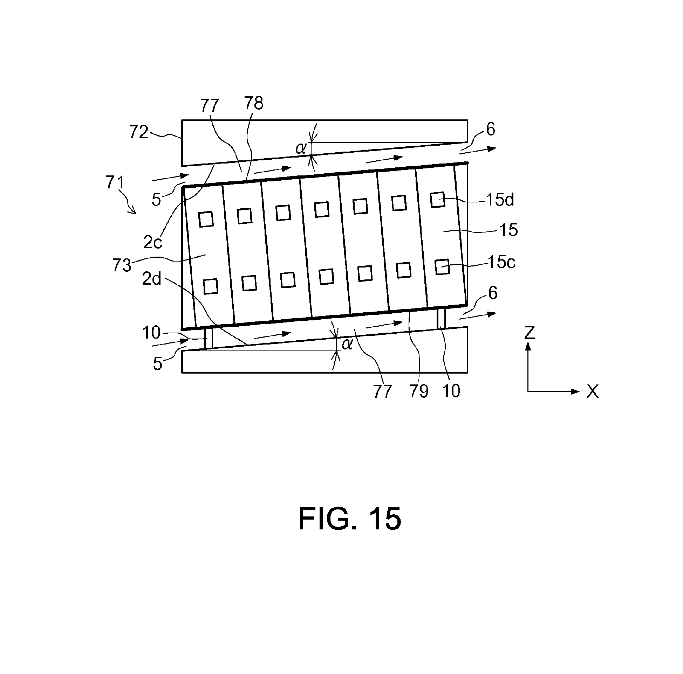

A fifth embodiment will be described based on FIG. 15. Note that in FIG. 15, the same constituent elements as those of the first to fourth embodiments shown in FIG. 1 to FIG. 3, FIG. 8 to FIG. 11, FIG. 13, and FIG. 14 will be denoted by the same reference numerals and symbols, and a description thereof will be omitted.

As shown in FIG. 15, in a battery pack device 71 of this embodiment, a battery module 73 or a plurality of battery modules 73 is (are) housed in a casing 72, with a stack direction of battery cells 15 being inclined with respect to a horizontal direction (arrow X direction).

That is, in this battery pack device 71, an upper surface and a bottom surface of the battery module 73 can be flat surfaces without any step shown in FIG. 3. Therefore, in the battery pack device 71, the stagnation or the like of the air passing through ventilation channels 77 is not likely to occur. Consequently, a good heat removal effect for the battery module 73 can be expected in the battery pack device 71.

Further, as described above, in the battery pack device 71, the upper surface and the bottom surface of the battery module 73 can be flat surfaces. This can simplify the shape of an upper end fixture 78 and a lower end fixture 79 in the battery pack device 71, enabling higher productivity of the battery pack device itself.

Incidentally, when the battery module 73 in which the stack direction of the battery cells 15 is inclined with respect to the horizontal direction (arrow X direction) is applied, it is also possible to form a battery pack device in which a plurality of the battery modules 73 are arranged side by side along a vertical direction (Z direction). Further, it is also possible to form a battery pack device in which a plurality of the battery modules 73 are arranged side by side along the horizontal direction (Y direction being a height direction of the battery cells of this embodiment).

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A battery pack device, comprising:
a battery module in which a plurality of battery cells stacked one on another are disposed;
a casing installed while housing the battery module therein;
an air inlet provided in the casing and letting an outside air into the casing;
an air outlet provided in the casing, disposed at a position higher than a position of the air inlet, and letting the air out of the casing; and
a ventilation channel in the casing connecting the air inlet and the air outlet, in a direction, the ventilation channel being inclined with respect to a horizontal direction.

2. The battery pack device according to claim 1,
wherein the ventilation channel is formed at a position where the ventilation channel comes into contact with at least an upper surface or a bottom surface of the battery module housed in the casing.

3. The battery pack device according to claim 1 or 2,
wherein a plurality of the battery modules are housed in the casing in a state of being arranged side by side along a vertical direction.

4. The battery pack device according to any one of claims 1 to 3,
wherein a plurality of the battery modules are housed in the casing in a state of being arranged side by side along the horizontal direction.

5. The battery pack device according to any one of claims 1 to 4,
wherein the plural battery cells each have a pair of terminals projecting from an end surface of the battery cell, and
wherein the battery module is housed in the casing, with a direction of a straight line connecting the pair of terminals on each of the battery cells being directed in a vertical direction.

6. The battery pack device according to any one of claims 1 to 4,
wherein the plural battery cells each have a pair of terminals projecting from an end surface of the battery cell, and
wherein the battery module is housed in the casing, with a direction in which the pair of terminals on each of the battery cells projects being directed in a vertical direction.

7. The battery pack device according to any one of claims 1 to 6, further comprising a second ventilation channel formed by a gap between the battery cells in the battery module.

8. The battery pack device according to any one of claims 1 to 4 and 7,
wherein the single battery module or the plural battery modules is housed in the casing, with a stack direction of the battery cells being inclined with respect to the horizontal direction
